Europäisches Patentamt

European Patent Office

Office européen des brevets

(11) Publication number: **0 178 065**
**B1**

(12) **EUROPEAN PATENT SPECIFICATION**

(45) Date of publication of patent specification: **30.11.88**

(21) Application number: **85306216.4**

(22) Date of filing: **02.09.85**

(51) Int. Cl.⁴: **A 01 C 19/04,** A 01 M 7/00

(54) Applicator.

(30) Priority: **22.09.84 GB 8424051**

(43) Date of publication of application:
**16.04.86 Bulletin 86/16**

(45) Publication of the grant of the patent:
**30.11.88 Bulletin 88/48**

(84) Designated Contracting States:
**BE DE FR IT NL**

(56) References cited:
**EP-A-0 072 120**
**AU-B- 441 499**
**FR-A-1 041 673**
**FR-A-1 428 494**
**GB-A-1 294 499**
**US-A-3 976 231**

(73) Proprietor: **WALKOVER SPRAYERS LIMITED**
**21 London Road**
**Great Shelford Cambridge CB2 5DF (GB)**

(72) Inventor: **Ridgeon, Paul William**
**Goreway 92 New Road Haslingfield**
**Cambridge, CB3 7LD (GB)**

(74) Representative: **Spence, Anne et al**
**Spence & Townsend Mill House Wandle Road**
**Beddington Croydon Surrey CR0 4SD (GB)**

Courier Press, Leamington Spa, England.

## Description

This invention relates to an applicator intended to apply fluid material (normally liquid but possibly powdered), e.g. fertilizer, to surfaces or vegetative or other biological matter associated with a surface. The machine described is particularly designed to efficiently apply controlled dosages of liquid fertilizers, weed killers and insecticides to grass, gravel or paved areas but may be used for applying many other liquids in various environments.

In our European Patent Application EP—A—72120 we have disclosed such an applicator comprising a chassis supported on two wheel members, external to the chassis, on which it can be moved over the ground. A container for liquid or other material is supported on the chassis and a rotary displacement pump having a pump housing and a rotor rotatable therein is located between the wheels. Means are arranged to connect the pump inlet to the container and the pump has a drive shaft common with the shaft on which one of the wheel members is mounted so that as the wheel member rotates the pump supplies material from the container under pressure through its outlet.

One object of the present invention is to provide a similarly operating applicator which can be manually pushed over the ground on a single front wheel, so that the machine is light, easily manoeuvred and can access areas which are inaccessible to most existing machines.

One form of applicator with a single front wheel comprising the features of the prior art portion of Claim 1 is known from British Patent Specification 1294499. However this uses a peristaltic type of pump in which a hose is compressed by projections attached to the wheel. The efficiency of this type of pump depends on several factors, the main factors being how effective the squeeze seal is and the extent and rate of tube recovery after squeeze. We have found this is affected by tube hardening, fatigue, chemical attack and structural break due to ultraviolet light or temperature cycling which cause the tube to collapse and/or fail to make an effective seal. The pump action is then reduced and finally fails. In addition this type of pump tends to give a surge delivery which is unsatisfactory when carefully controlled applications of chemicals are required.

The invention provides an applicator comprising a single front wheel, handle means for pushing the applicator over the ground, a pump having an inlet and an outlet, drive means for driving the pump directly from the wheel, a chassis, a tank for containing fluid to be pumped, mounting means mounting the pump, the wheel and the chassis, connecting means for connecting the tank with the pump inlet whereby rotation of the wheel as the applicator is pushed over the ground drives the pump to pump fluid from the tank through the pump outlet, characterised in that the pump has a pump housing and a rotor rotatable therein and connected to a drive shaft and in that the mounting means includes a substantially U-sectioned inverted yoke having arms bridging the wheel, a torque plate secured to the yoke and the pump, the drive shaft being rotatably mounted in the yoke and directly supporting and connecting the wheel and pump rotor, and the pump housing being mounted on the torque plate so that the load is taken into the yoke through the wheel and drive shaft without any substantial part passing through the pump housing.

This arrangement may be light and manoeuvrable, pumps smoothly without surge and keeps the pump as close as possible to the wheel while providing adequate support for the wheel and the pump without undue forces passing through the pump housing. The width of the applicator, apart from optional rear wheels, (at least in its preferred embodiment) is hardly greater than the combined widths of the pump, wheel and arms of the yoke. Preferably the side of the wheel adjacent the pump lies substantially in a plane centrally of the width of the machine.

The pump is preferably mounted on a torque plate fixed to the yoke, and holding the pump body stationary and resisting turning forces.

With advantage the applicator has two rear wheels (or other subsidiary support means) on which the device is freestanding and on which it can be pushed over the ground without any weight taken on the handles. However, the applicator is normally designed to be pushed with the rear support just lifted off the ground. For this reason the weight distribution is arranged so that the majority of the weight (preferably approximately two thirds when fully laden) is taken by the front wheel even when the device is free-standing. The width of the spray pattern and consequently applied dosage will be affected by the attitude and height of the nozzle head. This can be kept consistent by always operating with the rear support just clear of the ground. The wheel and pump may be formed with non circular (e.g. hexagonal) drive sockets to receive similar shaped portions of the drive shaft. The circular sectioned ends of the drive shaft may be located in bushes carried by the yoke.

Preferably the pump has a body moulded in two similar halves connected by a plurality of clamping bolts and the same bolts serve to bolt the pump body to the torque mounting plate secured to the yoke. This spreads the load through the pump body.

The applicator is provided with a single nozzle and check valve which is a snap fit directly into the pump outlet. Alternatively, it is provided with hose connection means to a spray boom which can be supported from the chassis. Preferably the chassis is formed from rectangular, with advantage square, sectioned tube preferably opening forwards, which enables booms to be slotted into it via a rectangular spigot.

One embodiment of applicator, in accordance with the invention, will now be described, by way of example only, with reference to the accompanying drawings of which:—

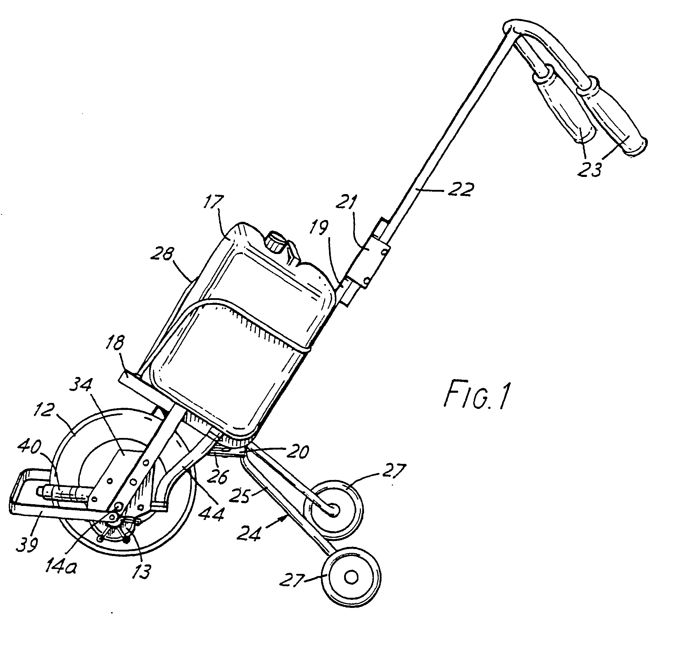

Fig. 1 is a perspective side view of the applicator,

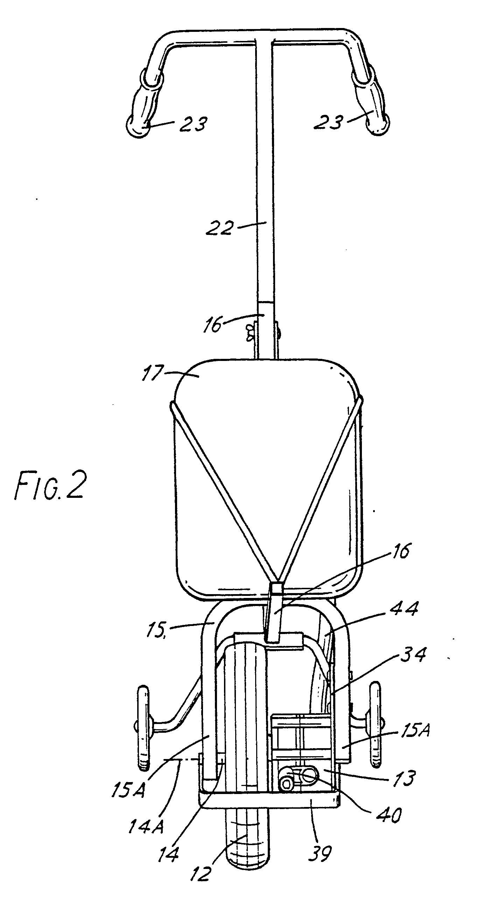

Fig. 2 is a perspective front view of the applicator,

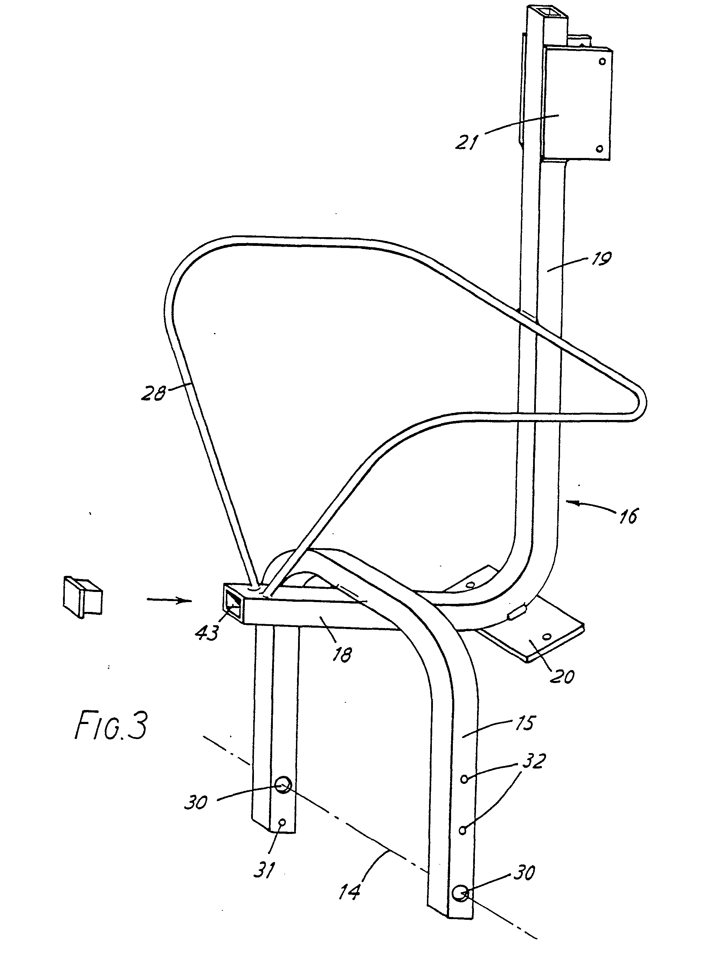

Fig. 3 is a perspective view of the chassis and yoke of the applicator of Figs. 1 and 2, on an enlarged scale,

Fig. 4 is a side view of a mounting plate of the applicator, and

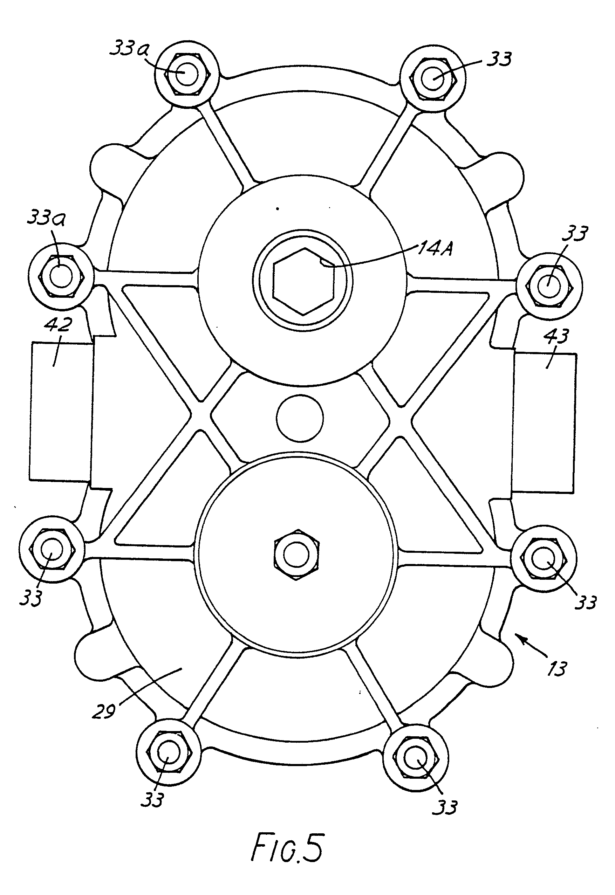

Fig. 5 is a view of the pump assembly of the applicator.

The applicator has a single front wheel 12 mounted side by side with a pump 13 coaxial therewith and connected by a drive shaft 14 the axis of which is indicated at 14A so that rotation of the wheel will drive the pump. The wheel 12 and pump 13 are bridged by an inverted U-shaped yoke 15 in the lower ends of the arms of which is journalled the drive shaft. A chassis 16 is welded to the yoke to support and locate a tank 17 containing liquid to be pumped. The chassis 16 comprises an L-shaped, rectangular sectioned, tubular member the substantially horizontal arm 18 of which is welded to the central underside of the yoke and the upright arm 19 of which carries plates 21 to which an upright extension bar 22 is adjustably attached. Bar 22 carries handle means 23 at its upper end for pushing the applicator over the ground. Adjacent the lower side of the bend of the chassis 16 is located a mounting plate 20. A rear wheel support assembly 24 comprises an inverted U-shaped bar member 25 having a mounting plate 26 attached to its central portion and carrying spaced rear wheels 27 at the ends of its arms. The mounting plate 26 is arranged to be connected to the mounting plate 20 to secure the rear wheel assembly to the chassis. A tank holding bar 28 is secured to the forward portion of the looped leg 18 of the chassis and the mid-front portion of the upright leg 19 to surround and locate the tank 17.

The yoke 15 has the ends of its arms formed with coaxial bores 30 to receive nylon bearing bushes (not seen) to support the drive shaft. The drive shaft has an hexagonal section apart from its ends which are received in these bushes. The left-hand arm of the yoke, as seen from the front, is slightly longer than the right-hand arm and its lower end is formed with a bore 31. The right-hand arm is formed with two bores 32 for connection of a torque mounting plate for the pump. The pump 13 in this embodiment is a gear pump of form known per se but could be other types of pump particularly other types of rotary displacement pump. The pump housing 29 is made in two identical halves bolted together by eight bolts 33, those marks 33a being extended in length compared with the other bolts so that they additionally pass through the pump mounting plate 34 at holes marked 35 and are secured thereto with nuts so that the same bolts which secure the housing halves together are used to secure the housing to the pump mounting plate. There are at least three mounting bolts angularly spaced from one another which spreads the load through the pump housing and resists turning forces. The pump has a hexagonal drive socket 14A.

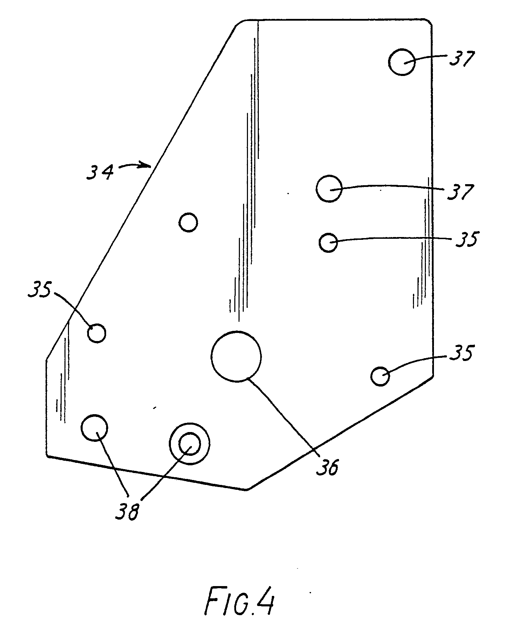

Referring to Fig. 4 showing the pump mounting torque plate 34, aperture 36 receives the drive shaft, apertures 37 are used for bolting the mounting plate to the yoke arm via bores 32 and corresponding bolts and nuts and apertures 38 are used for securing one arm of a nozzle protection bar 39 which extends in front of a nozzle 40 and the wheel 12 and has its other arm secured via the bore 31 to the yoke arm. The applicator is provided with a single nozzle 40 and check valve which is a snap fit directly into the pump outlet 42. Alternatively the applicator is provided with a spray boom which can be connected by a hose to the pump outlet and supported from the chassis. Preferably the spray boom is a slot fit into the front open end of the tubular arm 18.

The outlet from the tank 17 is connected to the pump inlet 43 via a snap in elbow connection hose 44.

To assemble the pump and front wheel: first the nozzle protection bar 39 is connected to the pump mounting plate 34; next the nozzle protection bar and pump mounting plate are secured to the yoke; next the pump is connected to the pump mounting plate using large plain washers as spacers and nuts and lock washers on the bolts 33a; next bearing bushes are assembled on either side of the yoke in the bores 30; next the drive shaft is partially inserted from the pump side; next a nylon thrust washer is inserted adjacent the pump on the shaft, next the wheel 12 having a hexagonal drive socket is inserted on the shaft, next one or more nylon thrust washers are inserted between the wheel and yoke and finally the shaft is fully inserted and retained with two star fix end caps.

With this arrangement the front of the whole applicator is very little wider than the width of the wheel 12, the pump and the thickness of the yoke arms.

Thus the invention provides an applicator which is easy to move into confined spaces and is small and light relative to known applicators. The applicator can be pushed over the ground supported on the rear wheels but will normally have the rear wheels just lifted off the ground by taking the weight on the handles. To enable this to be achieved easily, the applicator is designed so that the majority of the weight will be supported on the front wheel even when the rear wheels are resting on the ground so that not much of the weight need to be taken on the handles by the user.

**Claims**

1. An applicator comprising a single front wheel (12), handle means (23) for pushing the applicator over the ground, a pump (13) having an inlet (43) and an outlet (42), drive means for driving the pump directly from the wheel, a chassis (16), a tank (17) for containing fluid to be pumped

mounting means mounting the pump, the wheel and the chassis, connecting means for connecting the tank with the pump inlet whereby rotation of the wheel as the applicator is pushed over the ground drives the pump to pump fluid from the tank through the pump outlet, characterised in that the pump has a pump housing (29) and a rotor rotatable therein and connected to a drive shaft (14) and in that the mounting means includes a substantially U-sectioned inverted yoke (15) having arms (15B) bridging the wheel, a torque plate (34) secured to the yoke and the pump (13), the drive shaft being rotatably mounted in the yoke and directly supporting and connecting the wheel and pump rotor, and the pump housing being mounted on the torque plate so that the load is taken into the yoke through the wheel and drive shaft without any substantial part passing through the pump housing.

2. An applicator according to Claim 1 characterised in that the width of the applicator (apart from optional rear wheels) is not substantially greater than the combined widths of the pump (13), wheel (12) and arms (15A) of the yoke (15).

3. An applicator according to Claim 1 or Claim 2 characterised in that the side of the wheel (12) adjacent the pump lies substantially in a plane centrally of the width of the applicator.

4. An applicator according to any of Claims 1 to 3 characterised in that the pump housing (29) is secured to the torque plate (34) at at least three angularly spaced points.

5. An applicator according to any of Claims 1 to 4 characterised by a rear support (24) on which the applicator may be partially supported but which may be raised off the ground by the handle means, and in which the weight of the applicator is so distributed that the majority of the weight is taken by the front wheel (12) even when the applicator has the rear support (24) just raised off the ground by lifting the handle means.

6. An applicator according to any of claims 1 to 5 characterised in that the wheel and pump are formed with non-circular drive sockets to receive similar shaped portions of the drive shaft (14) and the ends of the drive shaft are journalled in the arms (15A) of the yoke (15).

7. An applicator according to any of claims 1 to 6 in which the pump housing (29) is moulded in two similar halves connected by a plurality of clamping bolts and the same bolts (33a) served to bolt the pump housing to the mounting means.

8. An applicator according to any of Claims 1 to 7 provided with a single nozzle (40) and a check valve which is a snap fit directly into the pump outlet (42).

9. An applicator according to any of claims 1 to 7 including a spray boom supportable from the chassis and connectable to the pump outlet (42).

**Patentansprüche**

1. Ausbringgerät mit einem einzelnen Vorderrad (12), einer Handhabe (23) zum Schieben des Ausbringgerätes über den Boden, einer Pumpe (13) mit einem Einlaß (43) und einem Auslaß (42), einem Antrieb, um die Pumpe direkt durch das Rad anzutreiben, einem Gestell (16), einem ein Fluid enthaltenden Tank (17), Mitteln zum Befestigen von Pumpe, Rad und Gestell, einer Verbindung zwischen dem Tank und dem Pumpeneinlaß, so daß beim Schieben des Ausbringgerätes über de Boden durch Rotation des Rades die Pumpe angetrieben und das Fluid aus dem Tank durch den Pumpenauslaß gepumpt wird, dadurch gekennzeichnet, daß die Pumpe ein Pumpengehäuse (29) und darin einen drehbaren und mit einer Antriebswelle (14) verbundenen Rotor aufweist und daß die Befestigungsmittel einen U-förmigen nach unten offenen Bügel (15) umfassen, dessen Schenkel (15A) das Rad und eine Drehmomentplatte (34), die mit dem Bügel und der Pumpe (13) verbunden ist, überbrücken, und daß die Antriebswelle drehbar im Bügel gelagert ist und direkt das Rad und den Pumpenrotor trägt und verbindet, und daß das Pumpengehäuse an der Drehmomentplatte angebracht ist, so daß die Last von dem Rad und der Antriebswelle in den Bügel übertragen wird, ohne daß das Pumpengehäuse wesentlich belastet wird.

2. Ausbringgerät nach Anspruch 1, dadurch gekennzeichnet, daß die Breite des Ausbringgerätes (mit Ausnahme eventuell vorgesehener Hinterräder) nicht wesentlich größer ist als die Summe der Breite von Pumpe (13), Rad (12) und Schenkel (15a) des Bügels (15).

3. Ausbringgerät nach Anspruch 1 oder Anspruch 2, dadurch gekennzeichnet, daß die der Pumpe benachbarte Seite des Rades (12) in einer Ebene etwa in der Mitte der Breite des Ausbringgerätes liegt.

4. Ausbringgerät nach einem der Ansprüche 1 bis 3, dadurch gekennzeichnet, daß das Pumpengehäuse (29) an mindestens drei winkelversetzten Punkten an der Drehmomentplatte (34) befestigt ist.

5. Ausbringgerät nach einem der Ansprüche 1 bis 4, gekennzeichnet durch eine hintere Stütze (24), durch welche das Ausbringgerät teilweise abstützbar ist, aber welche durch die Handhabe vom Boden abhebbar ist, und in welcher das Gewicht des Ausbringgerätes so verteilt ist, daß der größte Teil des Gewichtes auf dem Vorderrad (12) liegt, auch wenn die hintere Abstützung (24) des Ausbringgerätes durch Anheben der Handhabe vom Boden abgehoben ist.

6. Ausbringgerät nach einem der Ansprüche 1 bis 5, dadurch gekennzeichnet, daß das Rad und die Pumpe mit nicht kreisförmigen Antriebshülsen zur Aufnahme gleichgestalteter Bereiche der Antriebswelle (14) ausgebildet sind, und daß die Enden der Antriebswelle in den Schenkeln (15a) des Bügels (15) gelagert sind.

7. Ausbringgerät nach einem der Ansprüche 1 bis 6, in welchem das Pumpengehäuse (29) aus zwei gleichen Hälften geformt ist, die durch eine Vielzahl von Klemmbolzen verbunden sind, und daß dieselben Bolzen (33a) dazu dienen, das Pumpengehäuse an den Befestigungsmitteln festzulegen.

8. Ausbringgerät nach einem der Ansprüche 1 bis 7, ausgestattet mit einer einzelnen Düse (40) und einem Regulierventil, welches direkt in den Pumpenauslaß (42) einrastet.

9. Ausbringgerät nach einem der Ansprüche 1 bis 7, das einen von dem Gestell getragenen und an den Pumpenauslaß (42) anschließbaren Sprühausleger einschließt.

## Revendications

1. Applicateur comprenant une seule roue avant (12), des moyens à poignées (23) pour pousser l'applicateur sur le sol, une pompe (13) ayant une entrée (43) et une sortie (42), des moyens d'entraînement pour entraîner la pompe directement à partir de la roue, un châssis (16), un réservoir (17) destiné à contenir le fluide à pomper, des moyens de montage pour monter la pompe, la roue et le châssis, des moyens de raccordement pour raccorder le réservoir à l'entrée de la pompe, la rotation de la roue entraînant la pompe pour pomper du fluide du réservoir à travers la sortie de la pompe lorsque l'on pousse l'applicateur sur le sol, caractérisé par le fait que la pompe comporte un carter de pompe (29) et un rotor qui peut y tourner et qui est relié à un arbre d'entraînement (14), et par le fait que les moyens de montage comprennent une fourche (15) sensiblement en forme de U inversé comportant des bras (15A) entourant la roue, et une plaque de couple (34) fixée à la fourche et à la pompe (13), l'arbre d'entraînement étant monté en rotation dans la fourche et supportant directement et reliant la roue et le rotor de la pompe, et le carter de la pompe étant monté sur la plaque de couple de telle sorte que la charge soit absorbée par la fourche par l'intermédiaire de la roue et de l'arbre d'entraînement sans qu'aucune partie notable ne passe à travers le carter de la pompe.

2. Applicateur selon la revendication 1, caractérisé par le fait que la largeur de l'applicateur (mis à part des roues arrière facultatives) n'est pas sensiblement supérieure aux largeurs additionnées de la pompe (13), de la roue (12) et des bras (15A) de la fourche (15).

3. Applicateur selon la revendication 1 ou la revendication 2, caractérisé par le fait que le côté de la roue (12) qui est adjacent à la pompe est situé sensiblement dans un plan qui est central par rapport à la largeur de l'applicateur.

4. Applicateur selon l'une des revendications 1 à 3, caractérisé par le fait que le carter (29) de la pompe est fixé à la plaque de couple (34) en au moins trois points angulairement espacés.

5. Applicateur selon l'une des revendications 1 à 4, caractérisé par un support arrière (24) sur lequel l'applicateur peut reposer partiellement, mais qui peut être soulevé du sol par les moyens à poignées, et dans lequel le poids de l'applicateur est distribué de telle manière que la plus grande partie du poids soit absorbée par la roue avant (12) même lorsque le support arrière (24) de l'applicateur est juste soulevé du sol par soulèvement des moyens à poignées.

6. Applicateur selon l'une des revendications 1 à 5, caractérisé par le fait que la roue et la pompe sont munies de moyeux d'entraînement non circulaires destinés à recevoir des parties de forme similaire de l'arbre d'entraînement (14), et par le fait que les extrémités de l'arbre d'entraînement sont montées tournantes dans le bras (15A) de la fourche (15).

7. Applicateur selon l'une des revendications 1 à 6, caractérisé par le fait que le carter (29) de la pompe est moulé sous la forme de deux moitiés similaires reliées par une pluralité de boulons de serrage, les mêmes boulons (33a) servant à boulonner le carter de la pompe sur les moyens de montage.

8. Applicateur selon l'une des revendications 1 à 7 muni d'un seul ajutage (40) et d'une soupape de retenue qui est un bouchon ajusté directement dans la sortie (42) de la pompe.

9. Applicateur selon l'une des revendications 1 à 7, comprenant une rampe de pulvérisation qui peut être supportée par le châssis et reliée à la sortie (42) de la pompe.

FIG.1

FIG.2

FIG.3

FIG.4

4

Fig.5